Europäisches Patentamt

European Patent Office

Office européen des brevets

(19)

(11) Veröffentlichungsnummer: **0 117 904**
**A2**

(12) # EUROPÄISCHE PATENTANMELDUNG

(21) Anmeldenummer: **83111566.2**

(22) Anmeldetag: **19.11.83**

(51) Int. Cl.³: **B 60 C 13/00**

(30) Priorität: **13.12.82 DE 8234954 U**

(43) Veröffentlichungstag der Anmeldung:
**12.09.84 Patentblatt 84/37**

(84) Benannte Vertragsstaaten:
**AT BE CH DE FR GB IT LI LU NL SE**

(71) Anmelder: **Continental Gummi-Werke**
**Aktiengesellschaft**
**Königsworther Platz 1**
**D-3000 Hannover 1(DE)**

(72) Erfinder: **Mahling, Rolf, Dipl.-Chem.**
**Leipziger Strasse 18**
**D-3540 Korbach(DE)**

(54) **Fahrradluftreifen.**

(57) Die Erfindung bezieht sich auf einen Fahrradluftreifen aus Gummi oder gummiähnlichen Stoffen mit einer Karkasse, die durch Umschlingen von Wulstkernen in den Wülsten verankert ist, mit einem Laufstreifen und mit einer Seitenwandgummischicht. Zur Erzielung einer Reflexion von Seitenwandteilen wird vorgeschlagen, daß die Seitenwandgummischicht in das Material eingemischte Glimmerplättchen enthält und daß die Seitenwandgummischicht aus einer durchscheinenden oder durchsichtigen Kautschukmischung hergestellt ist.

Fig. 2

EP 0 117 904 A2

Fahrradluftreifen

Die Neuerung betrifft einen Reifen, insbesondere Fahrradluftreifen,aus Gummi oder gummiähnlichen Stoffen, mit einer Karkasse, die durch Umschlingen von Wulstkernen in den Wülsten verankert ist, mit einem Laufstreifen und mit einer Seitenwandgummischicht.

Es sind Fahrradreifen bekannt, deren Seitenwände ein gutes Reflexionsvermögen aufweisen. Diese Reifen sind mit dem Nachteil einer komplizierten Herstellung behaftet, weil die reflektierenden Partikeln in einem separaten Elastomerstreifen eingelagert sind, der zusammen mit dem üblichen Seitenwandstreifen vulkanisiert werden muß.

Der Neuerung liegt die Aufgabe zugrunde, eine Reflexion von Seitenwandteilen bei einem Fahrradreifen auf einfache Weise zu erreichen.

Diese Aufgabe wird erfindungsgemäß dadurch gelöst, daß die Seitenwandgummischicht in das Material eingemischte Glimmerplättchen enthält und daß die Seitenwandgummischicht aus einer durchscheinenden oder durchsichtigen Kautschukmischung hergestellt ist.

Die Erfindung bietet durch das Einbetten der für die Reflexion verantwortlichen Glimmerplättchen in die eigentliche Seitenwandgummischicht den Vorteil, daß beim Gebrauch des Reifens eine Ablösung von einzelnen Gummischichten vermieden wird.

Ein weiterer Vorteil besteht darin, daß selbst beim Abscheuern einzelner Teile der Reifenoberfläche das Reflexionsvermögen in diesen Bereichen erhalten bleibt.

Es kann ohne nennenswerte Mehrkosten auch der Laufstreifen reflektierend ausgebildet werden, sei es, daß für ihn dieselbe Kautschukmischung verwendet wird wie für die Reifenseitenwand, sei es, daß einer speziellen Laufstreifenmischung ebenfalls Glimmerteilchen beigemengt werden.

Während die neuerungsgemäßen Reifen bei Nacht auftreffendes Licht zurückwerfen und damit zur Verkehrssicherheit beitragen, verbreiten sie bei Tageslicht einen angenehmen Metallglanz-Effekt, so daß sie sich in vorteilhafter Weise von den üblichen Reifen aus schwarzem Gummi abheben.

Das Reflexionsvermögen und der Glanzeffekt werden dadurch noch optimiert, daß für die Seitenwandgummischicht eine Kalanderplatte verwendet wird, in der die Glimmerplättchen in der Nähe der Reifenaußenfläche bevorzugt parallel zu der Außenfläche orientiert sind.

Vorteilhafte Ausgestaltungen der Neuerung sind den Unteransprüchen zu entnehmen.

Nachfolgend wird ein Ausführungsbeispiel der Neuerung anhand einer Zeichnung näher erläutert.

Es zeigt

Fig. 1 einen Fahrradreifen in einem radialen Teilschnitt,

Fig. 2 einen Ausschnitt des Reifens nach Fig. 1 im Bereich der Reifenseitenwand.

- 3 -

0117904

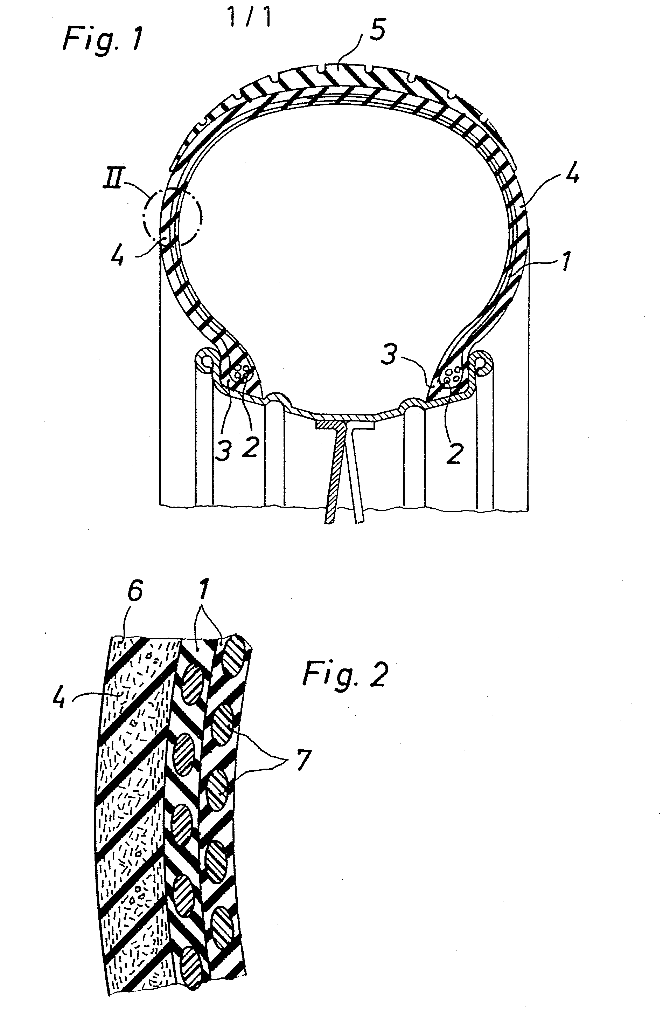

Der Fahrradreifen gemäß Fig. 1 weist eine Diagonalkarkasse 1 aus zwei Nylongewebelagen auf, die durch Umschlingen von Drahtkernen 2 in den Reifenwülsten 3 verankert sind. Seitlich außen befindet sich an den Reifenseitenwänden eine Seitenwandgummischicht 4, die einteilig von Wulst 3 zu Wulst 3 reichen kann. Ein Laufstreifen 5 kann ebenfalls aus der gleichen Kautschukmischung oder auch aus einer anderen hergestellt sein.

In Fig. 2 ist ein vergrößerter Ausschnitt des Reifens im Seitenwandbereich dargestellt, der den Aufbau der Seitenwandgummischicht 4 genauer erkennen läßt. Diese Gummischicht 4 besteht aus einer Kalanderplatte, die viele kleine Glimmerplättchen 6 enthält und die beim Konfektionieren des Reifens auf die Karkasse 1 mit den Karkaßfäden 7 aufgelegt und danach durch Vulkanisation mit ihr verbunden worden ist.

Die Bezeichnung Kalanderplatte soll zum Ausdruck bringen, daß die Seitenwandgummischicht 4 nicht etwa durch Spritzen mittels eines Extruders hergestellt worden ist, sondern durch Auswalzen einer Kautschukmischung auf einem Kalander. Durch das Verformen der Mischung in Umfangsrichtung der Kalanderwalzen wird erreicht, daß sich die zunächst völlig ungeordnet in der Mischung vorhandenen Glimmerplättchen 6 insbesondere in der Nähe der Oberflächen der Kalanderplatte bevorzugt parallel zu den Oberflächen orientieren und sich in diesen Bereichen schuppenartig überlappen. Zum Innern der Kalanderplatte und damit der Seitenwandgummischicht 4 hin nimmt diese Ordnung der Glimmerplättchen ab. Da eine transparente oder durchscheinende Kautschukmischung für die Seitenwandgummischicht des Reifens verwendet wird, erzeugen die Glimmerplättchen 6 einen schimmernden Metallglanz, und man erhält einen Reifen mit einem verbesserten Reflexionsvermögen.

Eine geeignete Kautschukmischung für eine durchscheinende Seitenwandgummischicht 4 setzt sich folgendermaßen zusammen:

|          |        |     |                                          |
|----------|--------|-----|------------------------------------------|
| 100      | Gewichtsteile |  | Kautschuk (natürlicher und/oder synthetischer) |
|          | 5-40   | "   | Kieselsäure                              |
|          | 1-3    | "   | phenolisches Alterungsschutzmittel (ASM) |
|          | 1-10   | "   | Lichtschutzwachse                        |
|          | 0,5-4  | "   | Schwefel                                 |
|          | 1-3    | "   | übliche Beschleuniger                    |
|          | 2-10   | "   | Weichmacher (ZnO, Stearinsäure)          |
| Zusatz:  | 3-6    | "   | zermahlener Glimmer                      |

Eine bevorzugte Reifenseitenwandgummischicht 4 wird erhalten, wenn man von den angegebenen Gewichtsteilbereichen für die einzelnen Zusätze jeweils etwa die Mitte nimmt. Durch einen Zusatz von 0,005 bis 0,05 Gewichtsteilen eines halbaktiven Rußes kann der Metallglanzeffekt noch wesentlich erhöht werden.

Die in die Kautschukmischung einzubringenden Glimmerplättchen 6 können durch Mahlen von Glimmer erzeugt werden. Geeignet sind mittlere Plättchengrößen (bzw. -durchmesser) von 5 bis 150 $\mu$m.

Eine weitere Verbesserung des Reflexionsvermögens und auch des Glanzeffektes wird durch die Verwendung solcher Glimmerplättchen 6 erzielt, die eine Ummantelung aus Metalloxiden, z.B. aus Titandioxid, aufweisen.

Schutzansprüche

1. Reifen, insbesondere Fahrradluftreifen, aus Gummi oder gummiähnlichen Stoffen, mit einer Karkasse, die durch Umschlingen von Wulstkernen in den Wülsten verankert ist, mit einem Laufstreifen und mit einer Seitenwandgummischicht, dadurch gekennzeichnet, daß die Seitenwandgummischicht (4) in das Material eingemischte Glimmerplättchen (6) enthält und daß die Seitenwandgummischicht (4) aus einer durchscheinenden oder durchsichtigen Kautschukmischung hergestellt ist.

2. Reifen nach Anspruch 1, dadurch gekennzeichnet, daß die Seitenwandgummischicht (4) 0,5 bis 10 Gewichtsteile, vorzugsweise 3-6 Gewichtsteile Glimmerplättchen (6) enthält.

3. Reifen nach Anspruch 1, dadurch gekennzeichnet, daß die Seitenwandgummischicht (4) aus einer Kalanderplatte hergestellt ist, in der die Glimmerplättchen (6) in der Nähe der Reifenaußenfläche bevorzugt parallel zu der Außenfläche orientiert sind.

4. Reifen nach Anspruch 3, dadurch gekennzeichnet, daß die Glimmerplättchen (6) sich zumindest teilweise schuppenartig überlappen.

5. Reifen nach Anspruch 1, dadurch gekennzeichnet, daß die Glimmerplättchen (6) Ummantelungen aus Metalloxiden aufweisen.

6. Reifen nach Anspruch 1, dadurch gekennzeichnet, daß die Glimmerplättchen (6) eine mittlere Größe von 5 bis 150 $\mu$m aufweisen.

7. Reifen nach den Ansprüchen 1 und/oder 2, dadurch gekennzeichnet, daß die Seitenwandgummischicht (4) aus einer
   Kautschukmischung hergestellt ist, die 0,005 bis 0,05
   Gewichtsteile eines halbaktiven Rußes enthält.


Hannover,den 10. Dezember 1982
Sr/Fr                82-17 G/Sr

Fig. 1

1/1

Fig. 2

0117904